# EUROPEAN PATENT SPECIFICATION

(11) **EP 3 207 794 B1**
(45) Date of publication and mention of the grant of the patent: **22.05.2019**
(21) Application number: 14903971.1
(22) Date of filing: 15.10.2014
(51) Int. Cl.: A01K 27/00

(54) **SWITCHING DEVICE OF RETRACTOR**
SCHALTVORRICHTUNG EINES AUFROLLERS
DISPOSITIF DE MARCHE/ARRÊT POUR DISPOSITIF DE BOBINE

(43) Date of publication of application: 23.08.2017
(73) Proprietor: Shi, Fuyou, Jinhua, Zhejiang 321016 (CN)
(72) Inventor: Shi, Fuyou, Jinhua, Zhejiang 321016 (CN)
(74) Representative: Cabinet Laurent & Charras
(86) International application number: PCT/CN2014/088645
(87) International publication number: WO 2016/058143

(56) References cited:
- EP-A1- 2 498 597
- CN-U- 202 145 790
- CN-U- 202 153 929
- CN-U- 203 597 221
- DE-U1-202010 016 260
- DE-U1-202013 100 163
- US-A1- 2012 006 284
- US-A1- 2013 167 781
- US-B2- 8 251 020

## Description

### FIELD OF THE INVENTION

The present invention relates to a retractor, and more particularly, to a switching device of a retractor which locks and opens a line roller much more easily.

### BACKGROUND OF THE INVENTION

Nowadays, retractors are commonly used by people with pets and have solved many troubles of pet-keepers. However, the existing retractors in the market have certain drawbacks, one of which is that the locking and unlocking of a retractor are separately handled. Other retractors are also disclosed in documents US2013/167781A1, EP2498597A1 and DE202013100163U1. Having complex structure, these retractors are easily to be damaged and difficult to repair, barely satisfying the requirements of users.

### SUMMARY OF THE INVENTION

To solve the above-mentioned problems, the present invention provides a switching device of a retractor according to claim 1, which locks and opens a line roller much more easily, and is simple in design and durable in use.

To this end, the present invention adopts the following technical solutions:
A switching device of a retractor, comprising a housing (1), wherein the housing (1) is provided with a line roller (2) coiled with a dog rope, a locking block (3) and a switch (4); the locking block (3), controlled by the switch, (4) is to be switched between a working position and an idle position, when the locking block (3) is in the working position, the line roller (2) is stopped rotating; the locking block (3) is provided with a locking end (31) which is clamped to the line roller (2) and a fixing end (32) which is connected to the housing (1); the locking block (3) rotates by taking the fixing end (32) as the centre of a circle, so that the locking end (31) is switched between the working position and the idle position; the fixing end (32) is provided with a torsional spring (33), and the torsional spring (33) applies to the locking block (3) a torsional force enabling the locking end (31) to rotate to the idle position; a tooth (21) matching the locking block is arranged on the sidewall of the line roller (2) which is around a line roller rotating centre array, and when the locking block (3) is rotated to the working position, the locking end (31) is clamped to the tooth (21).

According to the invention, the switch (4) has a switch body (41), wherein the upper portion of the switch body (41) is located outside the housing (1) and has an outer contour matching with the appearance of the housing (1); the right end of the upper portion of the switch body (41) is provided with a pressing portion (42) for pressing by a human hand; the lower portion of the switch body is located within the housing (1), comprising:
a support portion (43) provided on the left end of the lower portion of the switch body (41); wherein the support portion (43) is mounted in a transverse guide groove (11) provided in the housing (1) through a fixed pin (431); and the fixed pin shaft (431) is slidable in the guide groove (11);
a limitation pole (44) provided on the right end of the lower portion of the switch body (41); wherein the limitation pole (44) is mounted in an L-shaped slide groove (12) provided in the housing (1), and the limitation pole (44) can move up and down or push forward and pull back along the L-shaped slide groove (12); and
a pressing bar (45) provided in the middle of the lower portion of the switch body (41); wherein the pressing bar (45) abuts against the intermediate segment of the locking block (3).

Preferably, the support portion (43) is extendedly provided at the front end with a positioning rod (46) cooperating with the inner wall of the housing (1); wherein when the support portion (43) slides left and right in the guide groove (11), the positioning rod (46) is switched between two positioning grooves (13) and (14) sequentially arranged on the left and right sides of the inner wall of the housing (1); and a protruding stop portion (15) is provided between the two positioning grooves (13) and (14).

Preferably, it comprises a safeguard locking block (47) downwardly abutting against the locking end (31) from an obliquely upward direction; wherein the safeguard locking block (47) is the portion connecting the support portion (43) and the lower portion of the switch body (41).

Preferably, it comprises a safety member for preventing the locking block (3) from being pulled off; wherein the safety member comprises a block (51) projected from the intermediate segment of the locking block (3), and a baffle (52) provided on the inner wall of the housing (1) to cooperate with the block (51).

Preferably, the pressing bar (45) is pin-connected with a rotary shaft (451) at the bottom; wherein the rotary shaft (451) abuts against the locking block (3).

The beneficial effects of the present invention are that, the present invention provides a switching device of a retractor, which integrates the unlocking and locking operations of the retractor through a simple pushing-type switch. The switch has a push-pull button for pressing by hand, which is flexible and easy to use. When the button is pressed, the line roller (2) is stopped from rotating, and when the button is released, the line roller (2) resumes rotation. If the button is pulled back when being pressed, the switch is completely locked; and if the button is pushed forward when being pressed, the switch is completely unlocked. In addition, this switching device is protected from being pulled off in many aspects, and will be durable in use.

### BRIEF DESCRIPTION OF THE DRAWINGS

Fig.1 is a structure diagram of a specific embodiment of the present invention;
Fig.2 is a breakdown drawing of a specific embodiment of the present invention;
Fig.3 is a structure diagram of a switch 4 in a specific embodiment of the present invention;
Fig.4 is a schematic diagram showing an operational state 1 of a specific embodiment of the present invention;
Fig.5 is a schematic diagram showing an operational state 2 of a specific embodiment of the present invention;

In the drawings: 1 - housing; 2 - line roller; 3 - locking block; 4 - switch; 31 - locking end; 32 - fixing end; 33 - torsional spring; 21 - tooth; 41 - switch body; 42 - pressing portion; 43 - support portion; 44 - limitation pole; 431 - pin shaft; 451 - rotary shaft; 11 - guide groove; 12 - L-shaped slide groove; 45 - pressing bar; 46 - positioning rod; 13 - first positioning groove; 14 - second positioning groove; 15 - stop portion; 47 - safeguard locking block; 51 - block; 52 - baffle.

### DETAILED DESCRIPTION OF THE PREFERRED EMBODIMENT

In order to make the above-mentioned objectives, characteristics and advantages of the present invention more clear, the present invention is further illustrated in detail in combination with the accompanying drawings and embodiments hereinafter.

Numerous specific details have been described below for a full understanding of the present invention. However, the present invention can be implemented in ways different from the ones described herein. Those skilled in the art may make similar deductions without departing from the content of the present invention. Therefore, the present invention is not limited by the specific embodiments disclosed below.

Further, the present invention is detailed described with reference to the drawings hereof. For the sake of explanation, the cross-sectional view showing the structure of the device will be partially enlarged in a non-scale manner, which is merely taken as an example, and shall not limit the scope of the present invention. In addition, the length, width and depth of the three-dimensional space shall be indicated in actual production process.

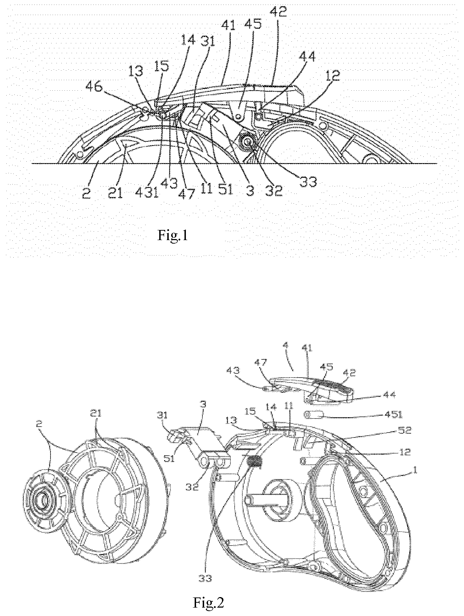

The present embodiment provides a switching device of a retractor. As shown in Fig.1 and Fig.2, the switching device of the retractor comprises a housing (1), wherein the housing (1) is provided with a line roller (2) coiled with a dog rope, a locking block (3) and a switch (4); the locking block (3) is controlled by the switch (4) to be switched between a working position and an idle position; when the locking block (3) is in the working position, the line roller (2) is stopped rotating.

As shown in Fig.1, the locking block (3) is provided with a locking end (31) which is clamped to the line roller (2) and a fixing end (32) which is connected to the housing (1); the locking block (3) rotates by taking the fixing end (32) as the centre of a circle, so that the locking end (31) is switched between the working position and the idle position; the fixing end (32) is provided with a torsional spring (33), and the torsional spring (33) applies to the locking block (3) a torsional force enabling the locking end (31) to rotate to the idle position; a tooth (21) matching with the locking block is arranged on the sidewall of the line roller (2) which is around a line roller rotating centre array; and when the locking block (3) is rotated to the working position, the locking end (31) is clamped to the tooth (21).

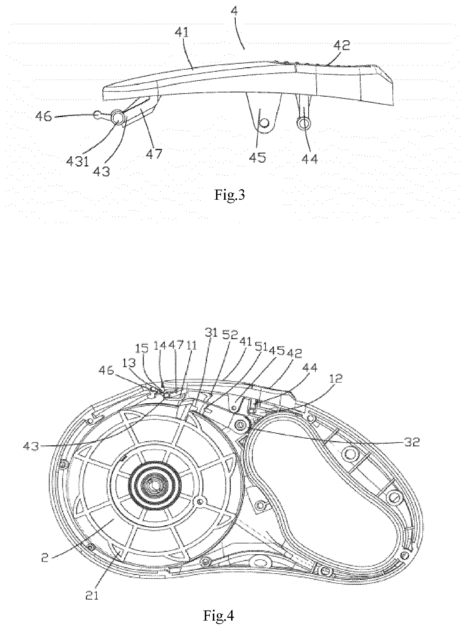

As shown in Fig.2 and Fig.3, the switch (4) comprises a switch body (41), wherein the upper portion of the switch body (41) is located outside the housing (1) and has an outer contour matching with the appearance of the housing (1); the right end of the upper portion of the switch body (41) is provided with a pressing portion (42) for pressing by a human hand; the lower portion of the switch body is located within the housing (1), which comprises a support portion (43) provided on the left end of the lower portion of the switch body (41); the support portion (43) is mounted in a transverse guide groove (11) provided in the housing (1) through a fixed pin (431); and the fixed pin shaft (431) is slidable in the guide groove (11); the switch (4) is rotated through the support portion (43) with the pin shaft (431) as an axis; the right end of the lower portion of the switch body (41) is provided with a limitation pole (44), wherein the limitation pole (44) is mounted in an L-shaped slide groove (12) provided in the housing (1), and can move up and down or push forward and pull back along the L-shaped slide groove (12); the L-shaped slide groove is formed by connecting a vertical segment and a horizontal segment; the switch body (41) is provided with a pressing bar (45) in the middle of the lower portion, wherein the pressing bar (45) abuts against the intermediate segment of the locking block (3).

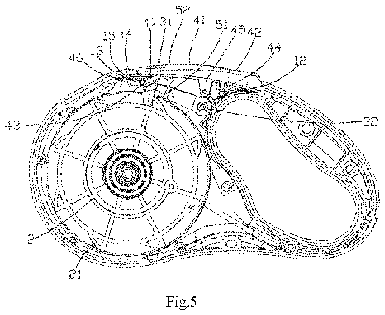

As shown in Fig.4 and Fig.5 of the present embodiment, when it's necessary to temporarily prevent the line roller (2) from rotating, a user can push the pressing portion (42) of the switch (4) to apply a downward force to the limitation pole (44), then the limitation pole (44) moves down to the bottom of the vertical segment of the L-shaped slide groove (12), and the pressing bar (45) provided in the middle of the lower portion of the switch body (41) pushes the locking block (3) down until the locking block (3) is clamped with the tooth (21) provided on the side wall of the line roller (2). The line roller is therefore locked. When the switch is released, the line roller will be unlocked. When it's necessary to maintain the line roller (2) in the locking state, after the above-mentioned steps have been completed, the user can apply a rightward force to the pressing portion (42) of the switch (4), then the limitation pole (44) moves rightward to the right end of the horizontal segment of L-shaped slide groove (12), and the support portion (43) together with the pin shaft (431) move to the right in the guide groove (11) by the same distance. The line roller is therefore maintained in the locking state. To unlock the line roller, the user can apply a leftward force on the pressing portion (42) of the switch (4), then the limitation pole (44) moves leftward to the left end of the horizontal segment of L-shaped slide groove (12) to release the switch (4), and the locking end (31) of the locking block (3) moves back to its idle position under the action of the torsional spring (33) provided on its fixing end (32) to separate from the tooth (21) on the line roller (2), thus effecting the unlocking operation.

Preferably, as shown in Fig.2, the pressing bar (45) is constituted by two bar bodies placed in parallel in facing positions; wherein the bar bodies are pin-connected with a rotary shaft (451) at the bottom, which is pivotally connected to and abuts against the locking block (3). In this embodiment, when the pressing bar (45) applies a force on the locking block (3), the rotary shaft (451) will rotate to cancel the friction force generated on the contact surface between it and the locking block (3), so as to lessen the force required by a user to drive the locking block (3).

Preferably, as shown in Fig.1 and Fig.3, the support portion (43) of the switch (4) is extendedly provided at the front end with a positioning rod (46) cooperating with the inner wall of the housing (1); wherein when the support portion (43) slides left and right in the guide groove (11), the positioning rod (46) is switched between a first positioning groove (13) and a second positioning groove (14) sequentially arranged on the left and right sides of the inner wall of the housing (1); and a protruding stop portion (15) is provided between the first positioning groove (13) and the second positioning groove (14). When the switch (4) is in the unlocked state, the positioning rod (46) is in the first positioning groove (13); and when the switch (4) proceeds to locking operations, the positioning rod (46) moves rightward with the support portion (43), and the positioning rod (46) passes through the stop portion (15) into the second positioning groove (14), with the limitation pole (44) being pushed rightward to the right end of the horizontal segment of the L-shaped slide groove (12).

It should be noted that, the positioning rod (46) should have a certain degree of elasticity, and it may have a certain deformation when passing through the stopper portion (15). When the positioning rod (46) enters into the second positioning groove (14), the stop portion (15) will cooperate with the positioning rod (46) to maintain the switch (4) in the locking state. When the positioning rod (46) slides over the stop portion (15) on the housing, a slight sound will be emitted indicating whether the pushing-type switch has completed the locking or unlocking operation.

In the above-mentioned embodiment, it's preferable to comprise a safeguard locking block (47) downwardly abutting against the locking end (31) from an obliquely upward direction; wherein the safeguard locking block (47) is the portion connecting the support portion (43) and the lower portion of the switch body (41). When the limitation pole (44) of the switch (4) is pushed rightward to the right end of the horizontal segment of the L-shaped slide groove (12), the safeguard locking block (47) abuts against the locking end (31) from an obliquely upward direction, to prevent the locking block (3) being pulled off the line roller (2) by a large pulling force due to the sudden running of a pet.

In the above-mentioned embodiment, it's preferable to comprise a safety member for preventing the locking block (3) from being pulled off; wherein the safety member comprises a block (51) projected from the intermediate segment of the locking block (3), and a baffle (52) provided on the inner wall of the housing (1) to cooperate with the block (51). When the locking block (3) rotates, the baffle (52) always abuts against the block (51) provided in the middle of the locking block (3), to prevent the locking block (3) from breaking in the middle section when a large pulling force is applied due to the sudden running of a pet.

The switching device of a retractor provided by the present embodiment integrates the unlocking and locking operations of the retractor through a simple pushing-type switch, and is provided with multiple protection measures to prevent from being pulled off. Hence, this switching device is durable in use.

Although the present invention has been disclosed as above with a preferred embodiment, it's not intended to limit the present invention. Any person skilled in the art will be able to make possible changes and modifications or equivalent substitutions on the technical schemes of the present invention

## Claims

1. A switching device of a retractor, comprising a housing (1), wherein the housing (1) is provided with a line roller (2) coiled with a dog rope, a locking block (3) and a switch (4); the locking block (3) is controlled by the switch (4) to be switched between a working position and an idle position; when the locking block (3) is in the working position, the line roller (2) is stopped rotating; the locking block (3) is provided with a locking end (31) which is clamped to the line roller (2) and a fixing end (32) which is connected to the housing (1); the locking block (3) rotates by taking the fixing end (32) as the centre of a circle, so that the locking end (31) is switched between the working position and the idle position; the fixing end (32) is provided with a torsional spring (33), and the torsional spring (33) applies to the locking block (3) a torsional force enabling the locking end (31) to rotate to the idle position; a tooth (21) matching with the locking block is arranged on the sidewall of the line roller (2) which is around a line roller rotating centre array; and when the locking block (3) is rotated to the working position, the locking end (31) is clamped to the tooth (21), wherein the switch (4) has a switch body (41), wherein the upper portion of the switch body (41) is located outside the housing (1) and has an outer contour matching with the appearance of the housing (1); the right end of the upper portion of the switch body (41) is provided with a pressing portion (42) for pressing by a human hand; the lower portion of the switch body is located within the housing (1), comprising:
a support portion (43) provided on the left end of the lower portion of the switch body (41); wherein the support portion (43) is mounted in a transverse guide groove (11) through a fixed pin (431); and the fixed pin shaft (431) is slidable in the guide groove (11):
**characterized in that** the transverse guide groove (11) is provided in the housing (1) and the lower portion of the switch body further comprises:
a limitation pole (44) provided on the right end of the lower portion of the switch body (41); wherein the limitation pole (44) is mounted in an L-shaped slide groove (12) provided in the housing (1), and can move up and down or push forward and pull back along the L-shaped slide groove (12); and
a pressing bar (45) provided in the middle of the lower portion of the switch body (41); wherein the pressing bar (45) abuts against the intermediate segment of the locking block (3).

2. The switching device of a retractor of claim 1, **characterized in that** the support portion (43) is extendedly provided at the front end with a positioning rod (46) cooperating with the inner wall of the housing (1); wherein when the support portion (43) slides left and right in the guide groove (11), the positioning rod (46) is switched between two positioning grooves (13) and (14) sequentially arranged on the left and right sides of the inner wall of the housing (1); and a protruding stop portion (15) is provided between the two positioning grooves (13) and (14).

3. The switching device of a retractor of claim 1, **characterized in that** it comprises a safeguard locking block (47) downwardly abutting against the locking end (31) from an obliquely upward direction; wherein the safeguard locking block (47) is the portion connecting the support portion (43) and the lower portion of the switch body (41).

4. The switching device of a retractor of claim 1, **characterized in that** it comprises a safety member for preventing the locking block (3) from being pulled off; wherein the safety member comprises a block (51) projected from the intermediate segment of the locking block (3), and a baffle (52) provided on the inner wall of the housing (1) to cooperate with the block (51).

5. The switching device of a retractor of claim 1, **characterized in that** the pressing bar (45) is pin-connected with a rotary shaft (451) at the bottom; wherein the rotary shaft (451) abuts against the locking block (3).

## Patentansprüche

1. Eine Schaltvorrichtung einer Aufrolleinrichtung, umfassend ein Gehäuse (1), wobei das Gehäuse (1) eine Schnurlaufrolle (2) enthält, aufgerollt mit einer Hundeleine, einer Verriegelungssperre (3) und einem Schalter (4); die Verriegelungssperre (3) wird durch den Schalter (4) gesteuert und kann zwischen einer Arbeitsposition und einer Leerlaufposition umgeschaltet zu werden; wenn sich die Verriegelungssperre (3) in der Arbeitsposition befindet, wird die Drehung der Schnurlaufrolle (2) gestoppt; die Verriegelungssperre (3) ist mit einem Verriegelungsende (31) versehen, das an der Schnurrolle (2) festgeklammert ist, und einem Befestigungsende (32), das mit dem Gehäuse (1) verbunden ist; die Verriegelungssperre (3) dreht sich, wobei das Befestigungsende (32) als Mittelpunkt eines Kreises dient, so dass das Verriegelungsende (31) zwischen der Arbeitsposition und der Leerlaufposition umgeschaltet wird; das Befestigungsende (32) ist mit einer Torsionsfeder (33) versehen, und die Torsionsfeder (33) bringt auf der Verriegelungssperre (3) eine Torsionskraft auf, die es dem Verriegelungsende (31) ermöglicht, sich in die Leerlaufstellung zu drehen; ein Zahn (21), der zur Verriegelungssperre passt, ist an der Seitenwand der Schnurlaufrolle (2) angeordnet, die eine drehbare Zentralanordnung der Schnurlaufrolle umgibt; und wenn die Verriegelungssperre (3) in die Arbeitsposition gedreht wird, wird das Verriegelungsende (31) mit dem Zahn (21) festgeklemmt.
wobei
der Schalter (4) einen Schalterkörper (41) hat, wobei der obere Abschnitt des Schalterkörpers (41) außerhalb des Gehäuses (1) untergebracht ist und einen Außenumriss hat, der zum Aussehen des Gehäuses (1) passt; das rechte Ende des oberen Abschnitts des Schalterkörpers (41) enthält einen Druckbereich (42), der mit einer menschlichen Hand gedrückt werden kann; der untere Abschnitt des Schalterkörpers ist innerhalb des Gehäuses (1) untergebracht und umfasst:
einen Halteabschnitt (43), vorgesehen am linken Ende des unteren Abschnitts des Schalterkörpers (41); wobei der Halteabschnitt (43) in einer querverlaufenden Führungsrille (11) verläuft, durch einen festen Stift (431); und der befestigte Stiftschaft (431) ist in der Führungsrille (11) verschiebbar.
**dadurch gekennzeichnet, dass** die querverlaufende Führungsrille (11) im Gehäuse (1) vorgesehen ist und der untere Abschnitt des Schalterkörpers umfasst weiterhin:
einen Begrenzungspol (44), vorgesehen am rechten Ende des unteren Abschnitts des Schalterkörpers (41); wobei der Begrenzungspol (44) auf einer L-förmigen Gleitnut (12) montiert ist, die im Gehäuse (1) vorgesehen ist und sich nach oben und unten bewegen kann oder nach vorne und nach hinten drücken, entlang der L-förmigen Gleitnut (12) ; und
ein Pressbalken (45), vorgesehen in der Mitte des unteren Abschnitts des Schalterkörpers (41); wobei der Pressbalken (45) an das Zwischensegment der Verriegelungssperre (3) grenzt.

2. Schaltvorrichtung einer Aufrolleinrichtung nach Anspruch 1, **dadurch gekennzeichnet, dass** der Halteabschnitt (43) verlängert vorgesehen ist an der Vorderseite, mit einer Positionierstange (46), die mit der Innenwand des Gehäuses (1) zusammenwirkt, wobei, wenn der Halteabschnitt (43) rechts und links in der Führungsrille (11) gleitet, die Positionierstange (46) zwischen zwei Positioniernuten (13) und (14) geschaltet wird, die sequentiell auf der linken und rechten Seite der Innenwand des Gehäuses (1) angeordnet sind; und ein hervorragender Sperrabschnitt (15) ist vorgesehen zwischen den beiden Positioniernuten (13) und (14).

3. Schaltvorrichtung einer Aufrolleinrichtung nach Anspruch 1, **dadurch gekennzeichnet, dass** sie eine Sicherungsvorrichtung (47) umfasst, die nach abwärts an das Verriegelungsende (31)grenzt, aus einer Richtung schräg von oben; wobei die Sicherungsvorrichtung (47) der Abschnitt ist, der den Halteabschnitt (43) und den unteren Abschnitt des Halteabschnitt (43) verbindet.

4. Schaltvorrichtung einer Aufrolleinrichtung nach Anspruch 1, **dadurch gekennzeichnet, dass** sie ein Sicherungsteil enthält, um zu verhindern, dass die Verriegelungssperre (3) herausgerissen wird; wobei das Sicherungsteil eine Sperre (51) enthält, projeziert vom Zwischensegment der Verriegelungssperre (3) und eine Prallvorrichtung (52), vorgesehen an der Innenwand des Gehäuses (1), um mit der Sperre (51) zusammenzuarbeiten.

5. Schaltvorrichtung einer Aufrolleinrichtung nach Anspruch 1, **dadurch gekennzeichnet, dass** der Pressbalken (45) über Bolzen mit einer Radialwelle (451) am Boden verbunden ist; wobei die Radialwelle (451) an die Verriegelungssperre (3) grenzt.

## Revendications

1. Dispositif de commutation d'un rétracteur, comprenant un boîtier (1), dans lequel le boîtier (1) est pourvu d'un enrouleur de ligne (2) sur lequel est enroulée une laisse de chien, d'un bloc de verrouillage (3) et d'un commutateur (4) ;
le bloc de verrouillage (3) est commandé par le commutateur (4) pour être commuté entre une position de travail et une position de repos ;
lorsque le bloc de verrouillage (3) est dans la position de travail, l'enrouleur de ligne (2) est arrêté en rotation ; le bloc de verrouillage (3) est pourvu d'une extrémité de verrouillage (31) qui est serrée l'enrouleur de ligne (2) et d'une extrémité de fixation (32) qui est reliée au boîtier (1) ;
le bloc de verrouillage (3) tourne en prenant l'extrémité de fixation (32) comme le centre d'un cercle, de sorte que l'extrémité de verrouillage (31) est commutée entre la position de travail et la position de repos ;
l'extrémité de fixation (32) est munie d'un ressort de torsion (33), et le ressort de torsion (33) applique au bloc de verrouillage (3) une force de torsion permettant à l'extrémité de verrouillage (31) de tourner vers la position de repos ;
une dent (21) s'appariant avec le bloc de verrouillage est disposée sur la paroi latérale de l'enrouleur de ligne (2) qui entoure un réseau de centres de rotation d'enrouleur de ligne ; et
lorsque le bloc de verrouillage (3) est tourné vers la position de travail, l'extrémité de verrouillage (31) est serrée sur la dent (21),
dans lequel le commutateur (4) a un corps de commutateur (41), dans lequel la partie supérieure du corps de commutateur (41) est située à l'extérieur du boîtier (1) et présente un contour extérieur s'appariant à l'apparence du boîtier (1) ;
l'extrémité droite de la partie supérieure du corps de commutateur (41) est munie d'une partie de pression (42) destinée à être pressée par une main humaine ;
la partie inférieure du corps de commutateur est située à l'intérieur du boîtier (1), comprenant :
une partie de support (43) prévue sur l'extrémité gauche de la partie inférieure du corps de commutateur (41) ;
dans lequel la partie de support (43) est montée dans une rainure de guidage transversale (11) à travers un arbre de broche fixe (431) ; et l'arbre de broche fixe (431) peut coulisser dans la rainure de guidage (11) ;
**caractérisé en ce que** la rainure de guidage transversale (11) est ménagée dans le boîtier (1), et **en ce que** la partie inférieure du corps de commutateur comprend en outre :
un pôle de limitation (44) prévu sur l'extrémité droite de la partie inférieure du corps de commutateur (41) ;
dans lequel le pôle de limitation (44) est monté dans une rainure de coulissement en forme de L (12) prévue dans le boîtier (1), et peut se déplacer vers le haut ou vers le bas ou pousser vers l'avant et vers l'arrière le long de la rainure de coulissement en forme de L (12) ; et
une barre de pression (45) prévue au milieu de la partie inférieure du corps de commutateur (41) ;
dans lequel la barre de pression (45) vient en butée contre le segment intermédiaire du bloc de verrouillage (3).

2. Dispositif de commutation d'un rétracteur selon la revendication 1, **caractérisé en ce que** la partie de support (43) est fournie de manière étendue à l'extrémité avant d'une tige de positionnement (46) coopérant avec la paroi interne du boîtier (1) ; dans lequel, lorsque la partie de support (43) glisse à gauche et à droite dans la rainure de guidage (11), la tige de positionnement (46) est commutée entre deux rainures de positionnement (13) et (14) agencées séquentiellement sur les côtés gauche et droit de la paroi intérieure du boîtier (1) ; et
une partie d'arrêt en saillie (15) est prévue entre les deux rainures de positionnement (13) et (14).

3. Dispositif de commutation d'un rétracteur selon la revendication 1, **caractérisé en ce qu'**il comprend un bloc de verrouillage de sécurité (47) venant en butée vers le bas contre l'extrémité de verrouillage (31) à partir d'une direction inclinée vers le haut ;
dans lequel le bloc de verrouillage de sécurité (47) est la partie reliant la partie de support (43) et la partie inférieure du corps de commutateur (41).

4. Dispositif de commutation d'un rétracteur selon la revendication 1, **caractérisé en ce qu'**il comprend un élément de sécurité pour empêcher le retrait du bloc de verrouillage (3) ;
dans lequel l'élément de sécurité comprend un bloc (51) faisant saillie à partir du segment intermédiaire du bloc de verrouillage (3), et un déflecteur (52) prévu sur la paroi interne du boîtier (1) pour coopérer avec le bloc (51).

5. Dispositif de commutation d'un rétracteur selon la revendication 1, **caractérisé en ce que** la barre de pression (45) est reliée par broche à un arbre rotatif (451) au niveau de la partie inférieure ;
dans lequel l'arbre rotatif (451) vient en butée contre le bloc de verrouillage (3).
